# EUROPEAN PATENT APPLICATION

(11) **EP 2 952 102 A1**
(43) Date of publication of application: **09.12.2015**
(21) Application number: 14745585.1
(22) Date of filing: 28.01.2014
(51) Int. Cl.: A23L 1/05, A23L 1/03

(54) **GLUCOMANNAN TO BE ADDED TO FOOD AND DRINK, AND FOOD AND DRINK CONTAINING SAME**

(30) Priority: 30.01.2013 JP 2013015386
(71) Applicant: Shimizu Chemical Corporation, Mihara-shi, Hiroshima 729-0321 (JP)
(72) Inventor: SHIMIZU, Hideki, Mihara-shi Hiroshima 729-0321 (JP); SHIMIZU, Hisao, Mihara-shi Hiroshima 729-0321 (JP); YAMAMOTO, Ayako, Mihara-shi Hiroshima 729-0321 (JP)
(74) Representative: Reitstötter Kinzebach
(86) International application number: PCT/JP2014/051758
(87) International publication number: WO 2014/119539

(57) **Abstract**

Disclosed is a composition for supplying dietary fiber to food and drink and/or for improving quality of food and drink, which includes a partially hydrolyzed substance of glucomannan. This partially hydrolyzed substance of glucomannan has a viscosity in a 1% aqueous solution which is in a range of 1,000 to 10,000 mPa·s and a weight average molecular weight which is in a range of 100,000 to 800,000. Because an aqueous solution thereof is lowly viscous, not only the composition can be added to food and drink, in a comparatively high concentration, but also upon adding the composition to an emulsified food such as an ice cream, even by heating, a shape of the food before heating can be retained.

## Description

### TECHNICAL FIELD

The present invention relates to glucomannan which forms hydrosol having a lower viscosity than that of natural glucomannan, when dissolved in water and is partially hydrolyzed (depolymerized) and to food and drink including the same.

### BACKGROUND ART

Glucomannan is a natural polysaccharide complex included in konjac potatoes. The glucomannan dissolves in water and forms hydrosol having a high viscosity. When this sol is reacted with alkali, elastic irreversible gel is produced. This process has been used for since a long time ago to manufacture konjac from konjac potatoes or konjac powders. As kinds of konjac powders, there are an unrefined konjac powder called as rough flour; and a partially refined konjac powder called as refined flour, obtained by removing impurities such as starch and fiber from the rough flour through winnowing.

Since the glucomannan, in a low concentration, has high thickening action, gel action and binding action, and has physiological action as dietary fiber being low in calories, the glucomannan is used to improve quality of food other than the konjac. However, because impurities such as trimethylamine and sulfite remain in the konjac refined flour and the konjac refined flour thus has peculiar irritating odor, it is difficult to use the konjac refined flour in order to improve quality of other food. Therefore, suited for the addition to food is highly water-soluble glucomannan manufactured by employing the method disclosed in Japanese Examined Patent Application Publication No. 6-97960 of the applicant or the like. In the above-mentioned glucomannan, most of the impurities such as the trimethylamine and the sulfite included in the konjac refined flour are removed, and the glucomannan is pulverized so as to have an average particle diameter of approximately 180 µm. However, a viscosity of the hydrosol being dissolved in water is, for example, approximately 38,000 mPa·s in a 1% solution, and the time required to reach a peak viscosity is also long. (Note: since the glucomannan forms the hydrosol, to be technically accurate, a term "to swell" should be used. Here, however, the term "to dissolve" is used.)

In general, since the glucomannan is added to food and drink in the form of the hydrosol, when the viscosity of the hydrosol is high, it is difficult for the hydrosol in a high concentration to be added thereto. Therefore, the applicant has proposed in International Publication No. WO2011/033807 that a molecular weight thereof is reduced by partially hydrolyzing (depolymerizing) natural glucomannan, and lowly viscous glucomannan having, for example, a viscosity of 100 mPa·s or less even in a 3% solution, which is greatly lower than that of the above-mentioned highly water-soluble glucomannan, when dissolved in water, is added to food and drink, thereby making the glucomannan be rich in dietary fiber and improving quality of food and drink. This lowly viscous glucomannan allows the addition thereto while having up to a high concentration which is approximately double the concentration which allows the addition of the highly water-soluble glucomannan thereto. Understandably, however, effect of improving the quality of food and drink based on high thickening action of the glucomannan is not sufficient, and in particular, effect of improving the quality of food and drink which is in an emulsified state is unsatisfactory.

### SUMMARY OF THE INVENTION

### TECHNICAL PROBLEM

Therefore, an object of the present invention is to provide glucomannan to be added to food and drink, whose viscosity of hydrosol is in a range between a viscosity of the above-mentioned highly water-soluble glucomannan and a viscosity of the above-mentioned lowly viscous glucomannan, and which can be added thereto at up to a concentration which is comparable to that of the lowly viscous glucomannan, but which exhibits improvement effect which is comparable to that of the highly water-soluble glucomannan; and food and drink including the glucomannan.

### SOLUTION TO PROBLEM

The above-mentioned object is solved by providing partially hydrolyzed glucomannan (hereinafter, which is referred to as "high function hydrolyzed glucomannan" whose viscosity is in a range of 1,000 to 10,000 mPa·s when a concentration thereof is 1% (which refers to % by weight and hereinafter, the same shall applies) and whose weight average molecular weight (Mw) is in a range of 100,000 to 800,000. The high function hydrolyzed glucomannan according to the present invention can be added to food and drink such that a concentration thereof, when added, is up to a concentration of approximately 8.0%, which is comparable to that of the lowly viscous glucomannan described in WO2011/033807. However, the high function hydrolyzed glucomannan is excellent, for example, in that shape retaining characteristics of emulsified food and the like based on the thickening action do not substantially change even by a temperature change.

### BRIEF DESCRIPTION OF THE DRAWINGS

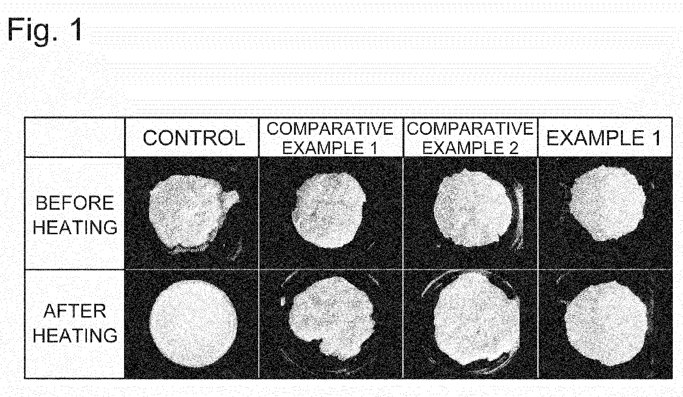

Fig. 1 shows photographs of: an ice cream of Example 1 which includes high function hydrolyzed glucomannan; an ice cream of Comparative Example 1 which includes highly water-soluble glucomannan; an ice cream of Comparative Example 2 which includes lowly viscous glucomannan; and a control ice cream which does not include any glucomannan, the photographs showing states before heating and after heating, respectively.

### DESCRIPTION OF EMBODIMENTS

The glucomannan is polysaccharide in which D-glucose and D-mannose are β-(1→4)-linked in a molar ratio of approximately 1 : 1.6, with an acetyl group being ester-linked at a ratio of one acetyl group per approximately 19 sugar residues. A molecular weight of natural glucomannan varies depending on producing districts and varieties of konjac potatoes, and in general, is 1,000,000 or more (a degree of polymerization is approximately 6,200).

It has been known since a long time ago that a molecular weight of the natural glucomannan can be reduced (depolymerizing thereof can be conducted) by partially hydrolyzing the β-(1→4)-mannoside linkage of the natural glucomannan by means of acid or an enzyme. Accordingly, theoretically, a partially hydrolyzed substance which is equivalent to the high function hydrolyzed glucomannan according to the present invention could be generated in the middle of the hydrolysis reaction. However, such a substance is not offered as a commodity in the market. The present inventors have developed a method for industrially manufacturing the high function hydrolyzed glucomannan from the konjac refined flour. This method includes: adding the konjac refined flour in a concentration of approximately 5% to a 1 to 2% hydrochloric acid heated at 80 ± 5°C for dissolution; and stopping the heating and causing the reaction at a room temperature for an approximately one day. After finishing the reaction, ethanol (95%) having the same volume as that of the reaction liquid is added, and the glucomannan which is partially hydrolyzed is separated, neutralization is conducted by using a 1N sodium hydroxide so as to achieve pH 5 to 7, and agitating, dehydration, drying, and pulverization are conducted. Features of this method reside in that a large part of the reaction is conducted at a room temperature and in that after finishing the reaction, the ethanol is added to the reaction liquid and the target substance is separated. Since the rate of reaction is a function of a temperature, the reaction at the room temperature makes it easy to control the time required for hydrolyzing the glucomannan so as to achieve a desired molecular weight. Since the glucomannan does not dissolve in moisture ethanol whose ethanol concentration is 30% or more, even by using the konjac refined flour as a raw material, impurities such as trimethylamine and sulfite are removed, thereby allowing high function hydrolyzed glucomannan having a high purity to be obtained. The reaction conditions to obtain the high function hydrolyzed glucomannan are not limited to the above-described conditions, and needless to say, any comparable reaction conditions (for example, sulfuric acid is used, instead of the hydrochloric acid) can be adopted.

Since the glucomannan is hardly digested in human digestive tracts, the glucomannan is used in low calorie food (diet food) for preventing obesity. Since a viscosity of an aqueous solution (hydrosol) of the high function hydrolyzed glucomannan is approximately one quarter or less of that of the highly water-soluble glucomannan, a larger quantity of the high function hydrolyzed glucomannan can be added to food. It has been known that the glucomannan has physiological action such as action of reducing serum cholesterol, action of adjusting sugar in the blood, and effect of improving constipation. Even in a case where for the purpose of utilizing the above-mentioned physiological action, the high function hydrolyzed glucomannan is added to food, as compared with the highly water-soluble glucomannan, a large quantity thereof can be added, or it is made easy to perform an operation of mixing thereof with food even with the same addition quantity.

The glucomannan has strong thickening action which is not seen in other natural polysaccharide gum and by utilizing this property, is used to improve quality of a variety of food and drink. As examples of food and drink to which the glucomannan is added, there included are jelly (improvement of food texture, prevention of sedimentation of fruit flesh), yogurt (prevention of sedimentation of fruit flesh, improvement of viscidity), pudding (improvement of food texture), drink (supplying of fiber, improvement of drinking feeling), an ice cream (enhancement of overrun, thickening), noodles (prevention of getting soggy in boiling, improvement of food texture), bread/cake (water holding property, prevention from aging), meat products (shape retaining characteristics, binding property, calorie reduction), and the like, and however, the present invention is not limited thereto. As compared with the highly water-soluble glucomannan, the high function hydrolyzed glucomannan exhibits effect of improving quality, when added in the same addition concentration as that of the highly water-soluble glucomannan to be added, which is comparable to that of the highly water-soluble glucomannan, and moreover, because of a low viscosity thereof, an operation of mixing is easy. As compared with the lowly viscous glucomannan, the high function hydrolyzed glucomannan is advantageous, for example, in that a quantity of the high function hydrolyzed glucomannan to be added to obtain comparable effect of improving quality (for example, effect of preventing fruit flesh from sedimentation) is small.

The effects which only the high function hydrolyzed glucomannan has and which are not seen in the highly water-soluble glucomannan and the lowly viscous glucomannan are in that by adding the high function hydrolyzed glucomannan to milk products such as ice creams, shakes, milk shakes, and yogurt and food compounding materials such as sorbet (soymilk, fruit juice, or the like) and gelato, emulsion stability and shape retaining characteristics (shape stability) of products can be maintained when the high function hydrolyzed glucomannan is heated, of course, at a low temperature or up to a normal temperature and even when the high function hydrolyzed glucomannan is heated at a temperature greater than or equal to the normal temperature.

As described above, basically, it is required for the high function hydrolyzed glucomannan to have a weight average molecular weight (Mw) which is in a range of approximately 100,000 to 800,000, a viscosity in a 1% aqueous solution which is in a range of 1,000 to 10,000 mPa·s, and a content of dietary fiber of 70% or more. However, in order to enhance the effects of the high function hydrolyzed glucomannan, it is preferable that Mw is 200,000 to 600,000 and it is most preferable that Mw is approximately 400,000; it is preferable that a viscosity in a 1% aqueous solution is 1,000 to 5,000 mPa·s and it is most preferable that a viscosity in the 1% aqueous solution is approximately 2,000 mPa·s; and it is preferable that a content of dietary fiber is 90% or more and it is most preferable that a content of dietary fiber is approximately 98%. When one purpose of the addition thereof is to supply fiber, the larger a concentration in which the high function hydrolyzed glucomannan is added to food and drink is, the better it is. However, the concentration must not be large enough to adversely affect the other properties (for example, food texture). An appropriate concentration varies depending on kinds of food and drink, and it is difficult to uniformly determine the appropriate concentration. In general, however, an appropriate concentration may be in a range of 0.2 to 8.0 wt%.

### [Examples]

The below-described Example and Comparative Examples are merely to confirm the effects achieved by the present invention, but are not necessarily linked directly to values as products.

### Example 1

In accordance with the reaction conditions described above, high function hydrolyzed glucomannan whose weight average molecular weight (Mw) was approximately 400,000, whose viscosity in a 1% aqueous solution was approximately 2,000 mPa·s, and whose content of dietary fiber was approximately 98% was manufactured. An aqueous solution was prepared by previously mixing 3 g of this high function hydrolyzed glucomannan and 8 g of sucrose, adding the resultant mixture to 24.7 g of water, and agitating the mixture and water. (Note: the reason why the sucrose and the high function hydrolyzed glucomannan were previously mixed and thereafter, the resultant mixture was dissolved in water is to prevent undissolved lumps from being generated and to shorten the time until the function hydrolyzed glucomannan is uniformly dissolved.)

Next, 24.5g of sweetened condensed milk, 10 g of raw milk, 7.9 g of butter, 1.8 g of skim milk, and 10 g of fresh cream, which were previously warmed and mixed, were added to this aqueous solution, and the resultant was agitated and emulsified. Thereafter, while cooling was being conducted, 10 g of fresh cream and 0.1 g of a flavor material were added and agitated, and freezing was conducted, thereby manufacturing an ice cream.

### Comparative Example 1

As highly water-soluble glucomannan, RHEOLEX (registered trademark) RS manufactured by Shimizu Chemical Corporation whose Mw was approximately 1,050,000, whose viscosity in a 1% aqueous solution was approximately 35,000 mPa·s, and whose content of dietary fiber was approximately 98% was used. An aqueous solution was prepared by previously mixing 1.5 g of this highly water-soluble glucomannan and 8 g of sucrose and adding the resultant mixture to 26. 7g of water, and agitating the mixture and water. The total amount of this aqueous solution was used and the same operation as in Example 1 was conducted, thereby manufacturing an ice cream.

### Comparative Example 2

As lowly viscous glucomannan, RHEOLEX (registered trademark) LM manufactured by Shimizu Chemical Corporation whose Mw was approximately 15,000, whose viscosity in a 3% aqueous solution was approximately 100 mPa·s, and whose content of dietary fiber was approximately 93% or more was used. An aqueous solution was prepared by previously mixing 3 g of this lowly viscous glucomannan and 8 g of sucrose and adding the resultant mixture to 24.7 g of water, and agitating the mixture and water. The total amount of this aqueous solution was used and the same operation as in Example 1 was conducted, thereby manufacturing an ice cream.

As a control ice cream, instead of an aqueous solution of glucomannan, water was increased by 3 g and the same operation as in Example 1 was conducted, thereby manufacturing an ice cream.

### <Shape Stability Test Upon Heating>

A cup of each ice cream of Example 1, Comparative Example 1, and Comparative Example 2, and the control was placed on a petri dish, the petri dish was put in a microwave oven whose output was 500W, and heating was conducted for 30 to 40 seconds therein, and states (appearance) thereof before and after heating were observed with naked eyes and were photographed. As shown in the photographs in Fig. 1, the shape of the ice cream of Example 1 before heating was almost retained even after heating, and in contrast thereto, the control ice cream was completely liquefied, and the shape of each ice cream of Comparative Example 1 and Comparative Example 2 before heating was greatly collapsed after heating, thus showing that shape retaining characteristics are largely reduced by heating.

### <Evaluation of Whippability>

Whippability was evaluated by each agitating time required to emulsify the mixture of the materials before freezing. Although the agitating time up to when the control was emulsified was 5 minutes or more, the agitating time up to when Example 1 was emulsified was less than 1 minute. Because of the high viscosity of Comparative Example 1, the agitating time up to when Comparative Example 1 was emulsified was longer than that of the control. Although Comparative Example 2 was capable of being emulsified for a short period of time, emulsifying capability thereof was weak, and phase separation was observed upon heating.

### <Food Texture Test>

Through in-house monitoring (N = 5), food texture of each ice cream manufactured was evaluated. The evaluation was that the food texture of the control was extremely light and lacked creaminess; as for Comparative Example 1, stickiness was felt, with extreme heavy feeling; and as for Comparative Example 2, solid content was strongly felt and creaminess was unsatisfactory. In contrast to this, the evaluation of Example 1 was that no uncomfortable heaviness and no solid content were felt, the sense of creaminess was rich, and the food texture was the best. From the above-described results, it is suggested that by using the high function hydrolyzed glucomannan, for example, new products such as an ice cream (a hot cream) which is capable of retaining the same food texture as in an icy state even when in a warmed state can be developed.

## Claims

1. A composition for supplying dietary fiber to food and drink and/or for improving quality of food and drink, the composition including a partially hydrolyzed substance of glucomannan whose viscosity in a 1% aqueous solution is in a range of 1,000 to 10,000 mPa·s and whose weight average molecular weight is in a range of 100,000 to 800,000.

2. The composition according to claim 1, wherein a viscosity of the partially hydrolyzed substance of glucomannan in a 1% aqueous solution is in a range of 1,000 to 5,000 mPa·s and a weight average molecular weight of the partially hydrolyzed substance of glucomannan is in a range of 200,000 to 600,000.

3. The composition according to claim 1, wherein a viscosity of the partially hydrolyzed substance of glucomannan in a 1% aqueous solution is approximately 2,000 mPa·s and a weight average molecular weight of the partially hydrolyzed substance of glucomannan is approximately 400,000.

4. The composition according to claim 1, wherein a content of dietary fiber of the partially hydrolyzed substance of glucomannan is at least 70% by weight.

5. The composition according to claim 2 or 3, wherein a content of dietary fiber of the partially hydrolyzed substance of glucomannan is at least 90% by weight.

6. Food and drink including any composition according to claim 1 to 5.

7. The food and drink according to claim 6, wherein as the partially hydrolyzed substance of glucomannan, at least 0.2% by weight of the whole food and drink is included.

8. The food and drink according to claim 6 or 7, wherein the food and drink is selected from jelly, yogurt, pudding, drink, an ice cream, noodles, a meat product, bread, or cake.
